(19) Europäisches Patentamt / European Patent Office / Office européen des brevets

(11) EP 2 759 387 B1

(12) **EUROPEAN PATENT SPECIFICATION**

(45) Date of publication and mention
of the grant of the patent:
**13.09.2017 Bulletin 2017/37**

(21) Application number: **12833506.4**

(22) Date of filing: **21.09.2012**

(51) Int Cl.:
*C08J 5/24* (2006.01)      *D07B 1/02* (2006.01)
*C08J 5/04* (2006.01)      *D04C 1/06* (2006.01)

(86) International application number:
**PCT/JP2012/074200**

(87) International publication number:
**WO 2013/042763 (28.03.2013 Gazette 2013/13)**

(54) **REINFORCED FIBER / RESIN FIBER COMPOSITE, AND METHOD FOR MANUFACTURING SAME**

VERBUNDWERKSTOFF AUS EINER VERSTÄRKTEN FASER UND EINER KUNSTFASER SOWIE HERSTELLUNGSVERFAHREN DAFÜR

COMPOSITE DE FIBRE RENFORCÉE / FIBRE DE RÉSINE, ET PROCÉDÉ POUR FABRIQUER CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.09.2011 JP 2011207258**

(43) Date of publication of application:
**30.07.2014 Bulletin 2014/31**

(73) Proprietor: **National University Corporation Kyoto Institute of Technology**
**Sakyo-ku**
**Kyoto-shi, Kyoto 606-8585 (JP)**

(72) Inventor: **NAKAI, Asami**
**Kyoto-shi**
**Kyoto 606-8585 (JP)**

(74) Representative: **Hart-Davis, Jason et al**
**Cabinet Beau de Loménie**
**158, rue de l'Université**
**75340 Paris Cedex 07 (FR)**

(56) References cited:
**JP-A- 2001 073 241    JP-A- 2004 115 961**
**JP-A- 2005 052 987    JP-A- 2007 046 197**
**JP-A- 2007 046 197    JP-A- 2008 266 648**
**JP-A- 2009 090 474**

- **DATABASE COMPENDEX [Online] ENGINEERING INFORMATION, INC., NEW YORK, NY, US; 2011, WONGSRIRAKSA P ET AL: "Hybridization of thermoplastic poly(lactic acid) and polyoxymethylene composites through micro-braiding", XP002736515, Database accession no. E20113414250228 & ANNUAL TECHNICAL CONFERENCE - ANTEC, CONFERENCE PROCEEDINGS - 69TH ANNUAL TECHNICAL CONFERENCE OF THE SOCIETY OF PLASTICS ENGINEERS 2011, ANTEC 2011 2011 SOCIETY OF PLASTICS ENGINEERS USA, vol. 1, 1 May 2011 (2011-05-01), - 5 May 2011 (2011-05-05), pages 607-610,**
- **Hajime Nakamura ET AL: "INTERFACIAL PROPERTIES OF CARBON FIBER REINFORCED THERMOPLASTIC COMPOSITES", The 10 th International Conference on Flow Processes in Composite Materials (FPCM10) Monte Verità, vol. 60, no. 5 15 July 2010 (2010-07-15), 1 April 2000 (2000-04-01), XP055172117, Retrieved from the Internet: URL:http://www.tech.plym.ac.uk/sme/fpcm/fp cm10/fpcm10_submission_11.pdf [retrieved on 2015-02-25]**

- DATABASE COMPENDEX [Online] ENGINEERING INFORMATION, INC., NEW YORK, NY, US; 2011, WONGSRIRAKSA P ET AL: "Mechanical properties of Jute Spun Yarn reinforced Bio-PA/MAPP composites by in-situ hybridization", XP002736516, Database accession no. E20123615404176 & 26TH ANNUAL TECHNICAL CONFERENCE OF THE AMERICAN SOCIETY FOR COMPOSITES 2011 AND THE 2ND JOINT US-CANADA CONFERENCE ON COMPOSITES - 26TH ANNUAL TECHNICAL CONFERENCE OF THE AMERICAN SOCIETY FOR COMPOSITES 2011 AND THE 2ND JOINT US-CANADA CONFERENCE ON, vol. 3, 26 September 2011 (2011-09-26), - 28 September 2011 (2011-09-28), pages 1868-1873,
- DATABASE COMPENDEX [Online] ENGINEERING INFORMATION, INC., NEW YORK, NY, US; 2010, WONGSRIRAKSA P ET AL: "In situ hybridization of thermoplastic composites by micro-braiding technique", XP002736517, Database accession no. E20124415610818 & 25TH TECHNICAL CONFERENCE OF THE AMERICAN SOCIETY FOR COMPOSITES AND 14TH US-JAPAN CONFERENCE ON COMPOSITE MATERIALS 2010 - 25TH TECHNICAL CONFERENCE OF THE AMERICAN SOCIETY FOR COMPOSITES AND 14TH US-JAPAN CONFERENCE ON COMPOSITE MATERIALS 2010 2010, vol. 1, 2010, pages 119-123,
- DATABASE COMPENDEX [Online] ENGINEERING INFORMATION, INC., NEW YORK, NY, US; 2006, TAKAI Y ET AL: "Mechanical property of long-fiber reinforced thermoplastic composites", XP002736518, Database accession no. E20124415620323 & PROCEEDINGS OF THE 12TH U.S.-JAPAN CONFERENCE ON COMPOSITE MATERIALS - PROCEEDINGS OF THE 12TH U.S.-JAPAN CONFERENCE ON COMPOSITE MATERIALS 2006 DESTECH PUBLICATIONS INC. USA, 2006, pages 182-190,
- SAKAGUCHI M ET AL: "The mechanical properties of unidirectional thermoplastic composites manufactured by a micro-braiding technique", COMPOSITES SCIENCE AND TECHNOLOGY, vol. 60, no. 5, 1 April 2000 (2000-04-01), pages 717-722, XP028794104, ISSN: 0266-3538, DOI: 10.1016/S0266-3538(99)00175-X
- M Kamaya ET AL: "Micro-Braided Yarn as Intermediate Material for Continuous Fiber Reinforced Thermoplastic Composites", 13 th. International Conference on Composite materials, 1 January 2001 (2001-01-01), XP055172288, Retrieved from the Internet: URL:http://www.iccm-central.org/Proceedings/ICCM13proceedings/SITE/PAPERS/Paper-1552 .pdf [retrieved on 2015-02-26]

**Description**

TECHNICAL FIELD

The present invention relates to reinforced fiber/resin fiber composites which are an intermediate material for a long-fiber reinforced thermoplastic resin structure, and to structures thereby obtained.

BACKGROUND ART

Fiber reinforced thermoplastic resins, which are a combination of a thermoplastic resin and a fiber, have good properties, i.e., light weight and high strength, and therefore, are used in a variety of fields. For example, in transport machines, such as automobiles, ships, aircrafts, etc., molded products of fiber reinforced thermoplastic resins are used as a portion of parts to improve fuel efficiency and safety.

As a type of fiber reinforced thermoplastic resin, fiber reinforced plastics (FRPs), which are a molded product of a thermoplastic resin to which a short fiber is added, have been well known. In recent years, a long-fiber reinforced thermoplastic resin, which is a combination of a thermoplastic resin and a long fiber (e.g., a reinforced fiber, such as a carbon fiber etc.), has attracted attention. As used herein, the term "long fiber" refers to a fiber extending in the longitudinal direction (so-called a "fiber"). The long-fiber reinforced thermoplastic resin has a number of advantages: (1) very good impact resistance; (2) good recyclability because it can be melted by heat; (3) the ability to be quickly molded because molding of it does not involve chemical reaction; (4) the ease of storage of an intermediate material (prepreg) before molding because chemical reaction has already been ended; (5) the ease of changing shape or attachment by being melted by heat; etc. Therefore, the long-fiber reinforced thermoplastic resin is expected as a very useful material in the future.

On the other hand, in the long-fiber reinforced thermoplastic resin, the thermoplastic resin has a very high melt viscosity, and therefore, it is disadvantageously difficult to impregnate the long fiber with the thermoplastic resin. As the impregnation characteristics of the resin decrease, the molded product cannot exhibit sufficient strength. Also, it is important for the long-fiber reinforced thermoplastic resin to improve interfacial characteristics between the long fiber and the thermoplastic resin. If the interfacial characteristics are insufficient, the long fiber and the thermoplastic resin are likely to come off the adhesion surface therebetween, so that the molded product is likely to be damaged. Here, generally, as the impregnation characteristics of the thermoplastic resin with respect to the long fiber become better, the interfacial characteristics between the long fiber and the thermoplastic resin become worse. For example, when the surface of the long fiber is modified by acid modification etc. in order to improve the interfacial characteristics, the contact angle of the thermoplastic resin with respect to the long fiber increases (i.e., the wettability of the long fiber surface deteriorates), and as a result, the impregnation characteristics become worse. Thus, there is a trade-off relationship between the impregnation characteristics and the interfacial characteristics. When a long-fiber reinforced thermoplastic resin structure is manufactured using the long-fiber reinforced thermoplastic resin, it is desirable to simultaneously provide as good impregnation characteristics and interfacial characteristics as possible.

In order to maintain good interfacial characteristics between the long fiber and the thermoplastic resin while improving the impregnation characteristics of the thermoplastic resin with respect to the long fiber, it may be effective to modify the form of the intermediate material used for manufacture of the long-fiber reinforced thermoplastic resin structure. In the intermediate material phase, the arrangement and mixture of the long fiber and the thermoplastic resin can be adjusted before thermoforming, and therefore, it is easy to control characteristics of the long-fiber reinforced thermoplastic resin structure, which is a final product. As used herein, the term "intermediate material" refers to a composite or mixture of the long fiber and the thermoplastic resin.

Conventionally, as an intermediate material for the long-fiber reinforced thermoplastic resin structure, for example, a "carbon fiber reinforced thermoplastic resin tape" has been developed which is a tape-like molded product of a carbon fiber (long fiber) impregnated with a thermoplastic resin (see, for example, Patent Document 1). In Patent Document 1, opened carbon fiber strands are immersed in a melted thermoplastic resin bath to impregnate a carbon fiber with a thermoplastic resin, and then, the resin-impregnated carbon fiber is passed through a nozzle for molding, whereby a thin and long carbon fiber reinforced thermoplastic resin tape is formed. In an example application, the carbon fiber reinforced thermoplastic resin tape is wound around the surface of a target structure and is then cooled to solidify. As a result, the structure is reinforced.

As another intermediate material for a long-fiber reinforced thermoplastic resin structure, a "commingled yarn for a composite material (composite material commingled yarn)" is known in which a continuous reinforced fiber bundle (long fiber) is commingled with a continuous thermoplastic resin fiber bundle (see, for example, Patent Document 2). In Patent Document 2, a non-twisted continuous reinforced fiber bundle and a non-twisted continuous thermoplastic resin fiber bundle are opened before being commingled together, to obtain a composite material commingled yarn. The composite material commingled yarn is, for example, processed into woven or knitted fabric.

CITATION LIST

PATENT LITERATURE

Patent Document 1: Japanese Unexamined Patent Application Publication No. 2007-118216
Patent Document 2: Japanese Unexamined Patent Application Publication No. H09-324331

SUMMARY OF INVENTION

TECHNICAL PROBLEM

However, the carbon fiber reinforced thermoplastic resin tape of Patent Document 1 and the composite material commingled yarn of Patent Document 2 have the following technical and economic problems.

In the carbon fiber reinforced thermoplastic resin tape of Patent Document 1, long fiber strands impregnated with a thermoplastic resin extend generally in parallel in the longitudinal direction. Therefore, the mixture ratio of the long fiber and the thermoplastic resin are generally uniform irrespective of the position of the tape. When such an intermediate material having a generally uniform mixture ratio is used, the composition of the long-fiber reinforced thermoplastic resin structure as a final product cannot be accurately controlled in a position-dependent manner. It is also difficult to control the composition, and therefore, it may be difficult to simultaneously achieve good impregnation characteristics of the long fiber and good interfacial characteristics between the long fiber and the thermoplastic resin. Moreover, a structure to which the carbon fiber reinforced thermoplastic resin tape is applicable is limited to those having a flat surface or a simple curved surface. This is because it is difficult to tightly attach the carbon fiber reinforced thermoplastic resin tape to a structure having a complicated surface. In addition, the carbon fiber reinforced thermoplastic resin tape is likely to have excessive stiffness due to its structure and has poor tackiness. Therefore, it is not easy to handle the carbon fiber reinforced thermoplastic resin tape. Note that, in order to manufacture the carbon fiber reinforced thermoplastic resin tape, it is necessary to use dedicated equipment, such as a thermoplastic resin bath, a nozzle for molding, etc., leading to an increase in cost.

Also, in the composite material commingled yarn of Patent Document 2, the continuous reinforced fiber bundle and the continuous thermoplastic resin fiber bundle are only simply commingled together, and therefore, it is difficult to accurately control the mixture ratio of both of the fibers along the longitudinal direction. Therefore, also in Patent Document 2, it is not possible to simultaneously achieve good impregnation characteristics of the long fiber and good interfacial characteristics between the long fiber and the thermoplastic resin. Also, the reinforced fiber is likely to be damaged due to friction during opening of the continuous reinforced fiber bundle or commingling of the continuous reinforced fiber bundle and the continuous thermoplastic resin fiber bundle. When the composite material commingled yarn is processed into woven or knitted fabric, each fiber is likely to be damaged. Moreover, when the composite material commingled yarn is manufactured, a portion of the fiber strands may be cut or come off, etc., to be lost during opening and commingling, resulting in a decrease in the yield of the final product.

Thus, at present, a reinforced fiber/resin fiber composite has not yet been developed which is an optimum intermediate material including a reinforced fiber and a resin fiber for manufacture of a long-fiber reinforced thermoplastic resin structure. With the above circumstances in mind, the present invention has been made. It is an object of the present invention to provide a reinforced fiber/resin fiber composite (intermediate material) in which the ratio and arrangement of a long fiber and a thermoplastic resin fiber are accurately controlled in order to simultaneously achieve different physical properties (e.g., impregnation characteristics, interfacial characteristics, etc.) of the reinforced fiber and the resin fiber. It is another object of the present invention to provide a method for efficiently and reliably manufacturing such a reinforced fiber/resin fiber composite at low cost.

SOLUTION TO PROBLEM

To achieve the object, a reinforced fiber/resin fiber composite according to the present invention has the following characteristic features.

The reinforced fiber/resin fiber composite (50) of the invention is a reinforced fiber/resin fiber composite which is an intermediate material for a long-fiber reinforced thermoplastic resin structure, in which

the reinforced fiber (15) is a long fiber extending in a longitudinal direction,
the resin fiber (25) includes at least two thermoplastic resin fibers,
the at least two thermoplastic resin fibers are braided at a predetermined angle with respect to the longitudinal direction of the long fiber to form a braid around the reinforced fiber (15); and

the at least two thermoplastic resin fibers are a polypropylene (PP) fiber and an acid-modified polypropylene (MAPP) fiber.

As described in the "BACKGROUND ART" section, in order to obtain a high-performance long-fiber reinforced thermoplastic resin structure, it is important to maintain good interfacial characteristics between the long fiber and the thermoplastic resin while improving impregnation characteristics of the long fiber. To do so, it may be effective to modify the form of the reinforced fiber/resin fiber composite which is an intermediate material.

In this regard, in the reinforced fiber/resin fiber composite having this configuration, when the long fiber extending in the longitudinal direction is used as the reinforced fiber, and the at least two thermoplastic resin fibers are used as the resin fiber, the at least two thermoplastic resin fibers are arranged around the reinforced fiber to surround the reinforced fiber. In other words, a hybrid resin fiber including the at least two thermoplastic resin fibers is provided around the long fiber. When the reinforced fiber/resin fiber composite having such a form is processed by thermoforming, then if the at least two thermoplastic resin fibers are suitably selected, the reinforced fiber can be reliably impregnated to the inside thereof with the thermoplastic resin, for example, when the thermoplastic resin fiber surrounding the reinforced fiber is melted, and at the same time, interfacial characteristics between the reinforced fiber and the thermoplastic resin can be improved. As a result, the reinforced fiber and the thermoplastic resin can be prevented from coming off the interface therebetween. Note that melting of the thermoplastic resin fiber during thermoforming, which is a type of so-called in-situ polymer blend, can be easily carried out.

In the reinforced fiber/resin fiber composite of the present invention, the at least two thermoplastic resin fibers are braided at a predetermined angle with respect to the longitudinal direction of the long fiber to form a braid around the reinforced fiber.

In order to improve the performance of the long-fiber reinforced thermoplastic resin structure, it may be effective to accurately control the composition of the long-fiber reinforced thermoplastic resin structure. For example, if the mixture ratio of the reinforced fiber and the thermoplastic resin or the composition ratio of the at least two thermoplastic resins can be flexibly controlled along the longitudinal direction of the reinforced fiber, the long-fiber reinforced thermoplastic resin structure as a final product can be manufactured in a form suitable for the purpose of use ("made-to-order" manufacture).

In this regard, in the reinforced fiber/resin fiber composite having this configuration, the at least two thermoplastic resin fibers are braided at a predetermined angle with respect to the longitudinal direction of the long fiber (reinforced fiber) to form a braid around the reinforced fiber. In other words, the at least two thermoplastic resin fibers are braided around the reinforced fiber using a "braiding technique" which is known as a traditional craft. In the braiding technique, strands (fiber) can be braided into various arrangement patterns by modifying the braiding pattern. Therefore, if the braiding technique is applied to the reinforced fiber/resin fiber composite, the mixture ratio of the reinforced fiber and the thermoplastic resin, or the composition ratio of the at least two thermoplastic resins, can be flexibly controlled, depending on the pattern in which strands are braided. In addition, if the braiding technique is used, strands (fiber) are not opened, and therefore, the fiber is not likely to be damaged.

Also, in the braiding technique, when a plurality of strands (fiber) are braided, the arrangement of the strands (fiber), and tension exerted on the strands (fiber), can be controlled on a strand-by-strand basis. Therefore, the reinforced fiber/resin fiber composite having this configuration is particularly effective in accurately controlling the structure and composition of the long-fiber reinforced thermoplastic resin structure as a final product. Therefore, if the braiding technique is used, the physical properties of each resin fiber can be imparted, in a desired form, to the long-fiber reinforced thermoplastic resin structure after thermoforming.

In the reinforced fiber/resin fiber composite of the present invention, the at least two thermoplastic resin fibers are preferably selected to have complementary physical properties after thermoforming.

In the reinforced fiber/resin fiber composite having this configuration, if thermoforming is performed using the at least two thermoplastic resin fibers, the physical properties of the fibers complement each other. A high-performance long-fiber reinforced thermoplastic resin structure which has a good balance between the physical properties of the fibers can be obtained.

In the reinforced fiber/resin fiber composite of the present invention, the at least two thermoplastic resin fibers are a polypropylene (PP) fiber and an acid-modified polypropylene (MAPP) fiber.

In the reinforced fiber/resin fiber composite having this configuration, the at least two thermoplastic resin fibers are a polypropylene (PP) fiber and an acid-modified polypropylene (MAPP) fiber. In a long-fiber reinforced thermoplastic resin structure obtained from this combination, the interfacial characteristics between the reinforced fiber and the thermoplastic resin can be improved while the impregnation characteristics of the thermoplastic resin with respect to the reinforced fiber are maintained good.

In order to achieve the above object, a method for manufacturing a reinforced fiber/resin fiber composite according to the present invention has the following characteristic features.

The method is a method for manufacturing a reinforced fiber/resin fiber composite which is an intermediate material for a long-fiber reinforced thermoplastic resin structure, in which

the reinforced fiber is a long fiber extending in a longitudinal direction, and

the resin fiber includes at least two thermoplastic resin fibers, and
the method includes:

a preparing step of causing the at least two thermoplastic resin fibers to be on standby around the reinforced fiber; and
a braiding step of continuously braiding the at least two thermoplastic resin fibers at a predetermined angle with respect to the longitudinal direction to surround the reinforced fiber.

According to the method for manufacturing the reinforced fiber/resin fiber composite having this configuration, advantages similar to those of the reinforced fiber/resin fiber composite described above can be obtained.

Specifically, a hybrid resin fiber including the at least two thermoplastic resin fibers is provided around the long fiber. When the reinforced fiber/resin fiber composite having such a form is processed by thermoforming, then if the at least two thermoplastic resin fibers are suitably selected, the reinforced fiber can be reliably impregnated to the inside thereof with the thermoplastic resin, for example, when the thermoplastic resin fiber surrounding the reinforced fiber is melted, and at the same time, interfacial characteristics between the reinforced fiber and the thermoplastic resin can be improved. As a result, the reinforced fiber and the thermoplastic resin can be prevented from coming off the interface therebetween. Note that melting of the thermoplastic resin fiber during thermoforming, which is a type of so-called in-situ polymer blend, can be easily carried out.

Moreover, the method for manufacturing the reinforced fiber/resin fiber composite having this configuration employs a "braiding technique" which is known as a traditional craft. In the braiding technique, strands (fiber) can be braided into various arrangement patterns by modifying the braiding pattern. Therefore, if the braiding technique is applied to the reinforced fiber/resin fiber composite manufacturing method, the mixture ratio of the reinforced fiber and the thermoplastic resin, or the composition ratio of the at least two thermoplastic resins, can be flexibly controlled, depending on the pattern in which strands are braided. In addition, if the braiding technique is used, strands (fiber) are not opened, and therefore, the fiber is not likely to be damaged.

Also, in the braiding technique, when a plurality of strands (fiber) are braided, the arrangement of the strands (fiber), and tension exerted on the strands (fiber), can be controlled on a strand-by-strand basis. Therefore, the method for manufacturing the reinforced fiber/resin fiber composite having this configuration is particularly effective in accurately controlling the structure and composition of the long-fiber reinforced thermoplastic resin structure as a final product. Therefore, if the braiding technique is used, the physical properties of each resin fiber can be imparted, in a desired form, to the long-fiber reinforced thermoplastic resin structure after thermoforming.

BRIEF DESCRIPTION OF DRAWINGS

[FIG. 1] FIG. 1(a) is a schematic diagram showing an example braiding machine for manufacturing a reinforced fiber/resin fiber composite according to the present invention, and FIG. 1(b) is an external view of the reinforced fiber/resin fiber composite.

[FIG. 2] FIG. 2 is a schematic cross-sectional view of a reinforced fiber/resin fiber composite for describing a pattern in which a PP fiber and an MAPP fiber (braiding fibers) are braided with respect to a carbon fiber (axial fiber), showing a double-layer arrangement (FIG. 2(a)) and an alternate arrangement (FIG. 2(b)).

[FIG. 3] FIG. 3 shows a photograph of an external appearance of a carbon fiber/resin fiber composite of an example in which two thermoplastic resin fibers are braided with respect to a carbon fiber, and a diagram showing a structure thereof.

[FIG. 4] FIG. 4 shows photographs of cross-sections of test pieces having a double-layer arrangement and an alternate arrangement, indicating changes in their impregnated states depending on the molding time.

[FIG. 5] FIG. 5 shows example image data for calculating the unimpregnation ratio of a carbon fiber, indicating a cross-section of a test piece before image processing (FIG. 5(a)) and that after image processing (FIG. 5(b)).

[FIG. 6] FIG. 6 is a graph plotted to show a relationship between the unimpregnation ratio and molding time of each of test pieces having the double-layer and alternate arrangements.

[FIG. 7] FIG. 7 is a graph of measurement data (load-flexure curve) of each test piece which was obtained by a three point bending test.

DESCRIPTION OF EMBODIMENTS

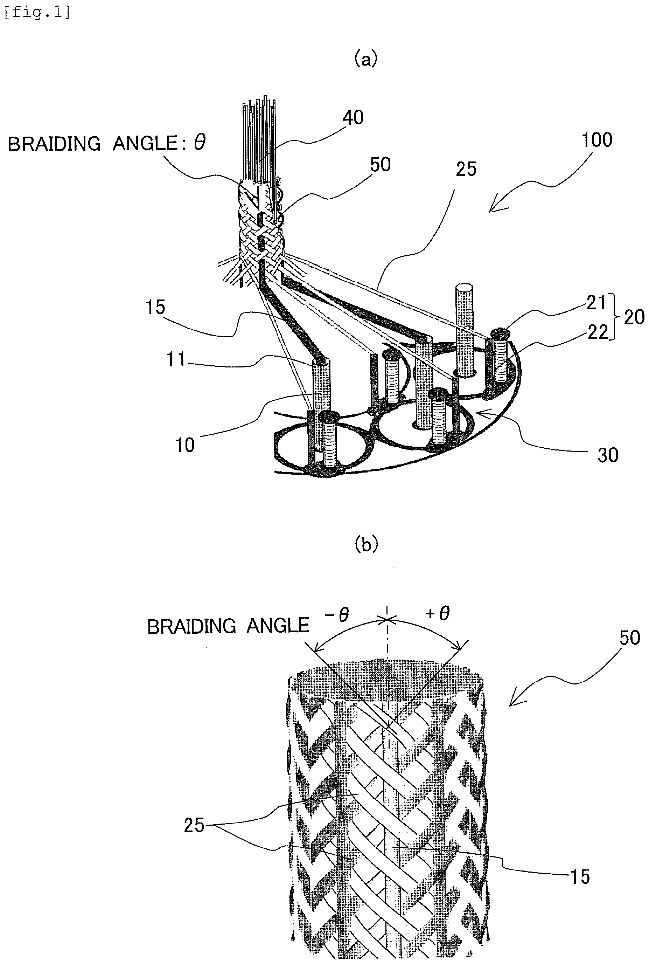

Embodiments of a reinforced fiber/resin fiber composite according to the present invention and a method for manufacturing the composite will now be described with reference to FIGS. 1 to 6. Note that the present invention is not intended to be limited to configurations described in the embodiments below and the accompanying drawings.

<Reinforced Fiber/Resin Fiber Composite>

A reinforced fiber/resin fiber composite according to the present invention which is an intermediate material for a long-fiber reinforced thermoplastic resin structure is provided in the form of a composite or mixture including a long fiber and a thermoplastic resin fiber. The long fiber includes a multifilament, which is a group of monofilaments. The multifilament is a thin and long fiber extending in the longitudinal direction. The long fiber may, for example, be a reinforced fiber (e.g., a carbon fiber, glass fiber, aramid fiber, etc.).

The thermoplastic resin fiber includes at least two fibers. It is desirable to select a combination of thermoplastic resin fibers which have complementary physical properties after thermoforming. For example, a combination of thermoplastic resin fibers is selected so that good impregnation characteristics and good interfacial characteristics are simultaneously provided by thermoforming. For example, a polypropylene (PP) fiber, which is representative of a thermoplastic resin fiber, has good resin impregnation characteristics and slightly poor interfacial characteristics (e.g., interfacial shear strength.). On the other hand, if a PP fiber is modified with an acid to form an acid-modified polypropylene (MAPP) fiber, the interfacial characteristics are improved, and at the same time, the wettability deteriorates, and therefore, the thermoplastic resin impregnation characteristics decrease. Therefore, a PP fiber and an MAPP fiber are combined into a new hybrid resin fiber having both types of characteristics. In the hybrid fiber, the fibers offset mutual lacks of physical properties, so that good impregnation characteristics and good interfacial characteristics are simultaneously achieved, and therefore, a material having both good impregnation characteristics and good interfacial characteristics can be provided.

In the reinforced fiber/resin fiber composite of the present invention, at least two thermoplastic resin fibers are provided around the long fiber (reinforced fiber) to surround the long fiber in order to form a hybrid. As used herein, the term "surround" with respect to the long fiber means that the at least two thermoplastic resin fibers are provided on the surface of the long fiber, overlapping each other, so that all or a portion of the surface of the long fiber is concealed from the outside. The term "provided around" or "arranged around" with respect to the long fiber means that, in a cross-sectional view of the fiber, the outlines of the at least two thermoplastic resin fibers are in contact with or close to the outline of the long fiber. The arrangement of the at least two thermoplastic resin fibers with respect to the long fiber is not limited to an arrangement in which the at least two thermoplastic resin fibers extend generally in parallel to the long fiber in the longitudinal direction. Alternatively, for example, the at least two thermoplastic resin fibers may extend at a predetermined angle with respect to the long fiber, may be bent or curved and extend while gradually changing the position, or may be randomly positioned. In other words, the hybrid resin fiber including the at least two thermoplastic resin fibers only needs to be provided around the long fiber. These arrangements of the at least two thermoplastic resin fibers with respect to the long fiber may be implemented by a variety of techniques. The hybrid fiber is effectively obtained by using a "braiding technique" which will next be described.

<Braiding Technique>

A braiding technique is known as a Japanese traditional craft, in which a plurality of thin threads (braiding fiber strands) are interwoven into a fabric which is strong and has a beautiful woven pattern. In the present invention, a braided fabric is provided in which at least two thermoplastic resin fibers which are braiding fibers are arranged around a reinforced fiber which is an axial fiber. Specifically, the at least two thermoplastic resin fibers are interwoven at a predetermined angle with respect to the longitudinal direction of the reinforced fiber to form a braid in which the at least two resin fibers are braided around the reinforced fiber.

FIG. 1(a) is a schematic diagram showing an example braiding machine 100 for manufacturing a reinforced fiber/resin fiber composite 50 of the present invention. FIG. 1(b) is an external view of the reinforced fiber/resin fiber composite 50. As shown in FIG. 1(a), the braiding machine 100 includes axial fiber supply units 10 which supply an axial fiber strand (reinforced fiber) 15 to a core fiber (reinforced fiber) 40 which is a core of a braided fabric (the reinforced fiber/resin fiber composite 50), and braiding fiber supply units 20 which supply a braiding fiber strand (resin fiber) 25 to the core fiber 40. Prior to formation of a braided fabric, for preparation, the braiding fiber supply units 20 are on standby around the axial fiber supply unit 10. The axial fiber supply units 10 and the braiding fiber supply units 20 are provided in pairs. In FIG. 1(a), the axial fiber supply units 10 are each paired with one braiding fiber supply unit 20. Alternatively, the axial fiber supply unit 10 may be each combined with a plurality of braiding fiber supply units 20. The number of the braiding fiber supply units 20 may be suitably set based on the structural design of the reinforced fiber/resin fiber composite 50. The axial fiber supply unit 10 is connected to a roving (not shown) into which the reinforced fiber is wound, and outputs the reinforced fiber unwound from the roving through a tip portion 11 as the axial fiber strand 15. The braiding fiber supply unit 20 includes a spindle 21 around which the braiding fiber strand 25 is wound, and an unwinding bar 22 through which the braiding fiber strand 25 pulled out of the spindle 21 is passed. The braiding fiber supply unit 20 revolves around the corresponding axial fiber supply unit 10. In this case, the relative positions of the spindle 21 and the unwinding bar 22 as viewed from above change. As a result, the braiding fiber strand 25 wound around the spindle 21 is continuously released from the spindle 21 through the unwinding bar 22. The released braiding fiber strands 25 are collected to surround the axial fiber strands 15, and the axial fiber supply units 10 and the braiding fiber supply units 20 move on a braiding orbit 30, so that the braiding fiber strands 25 are braided at a braiding angle θ with respect to the longitudinal direction of the axial fiber strands 15, and therefore, a braid is formed. The braid formed by the axial fiber strands 15 and the braiding fiber strands 25 surrounds the core fiber 40. Thus, the reinforced fiber/resin fiber composite 50 (also referred to as a "hybrid fiber composite") as a braided fabric shown in FIG. 1(b) in which the braiding fiber strands 25 are braided at the braiding angle θ with respect to the axial fiber strands 15 is continuously formed around the core fiber 40. The resultant reinforced fiber/resin fiber composite 50 is processed by thermoforming directly or after being arranged in a desired shape, to obtain the desired long-fiber reinforced thermoplastic resin structure. Melting of the resin fiber during thermoforming, which is a type of so-called in-situ polymer blend, can be easily carried out.

In the braiding technique, the pattern in which the braiding fiber strands 25 are braided with respect to the axial fiber strands 15 may be modified to provide various arrangement patterns of the braiding fiber strands (thermoplastic resin fiber) 25. Therefore, If the braiding technique is applied to the reinforced fiber/resin fiber composite 50 of the present invention, the mixture ratio of the reinforced fiber and the thermoplastic resin, and the composition ratio of the thermoplastic resin melted by heat, can be flexibly controlled by the pattern in which the strands are braided. As a result, the long-fiber reinforced thermoplastic resin structure as a final product can be manufactured in a form suitable for the purpose of use ("made-to-order" manufacture). Also, if the braiding technique is used, the fibers are not opened, and therefore, are not likely to be damaged. Moreover, in the braiding technique, when a plurality of braiding fiber strands are braided, the arrangement of the braiding fiber strands, and tension exerted on the braiding fiber strands, can be controlled on a strand-by-strand basis. Therefore, the braiding technique is particularly effective in accurately controlling the structure and composition of the long-fiber reinforced thermoplastic resin structure as a final product. Therefore, if the braiding technique is used, the physical properties of each resin fiber can be imparted, in a desired form, to the long-fiber reinforced thermoplastic resin structure after thermoforming.

Examples

Examples relating to the reinforced fiber/resin fiber composite (hybrid fiber composite) of the present invention which is manufactured using the above braiding technique will be described. In the examples, a carbon fiber is used as the long fiber which is a reinforced fiber, and a polypropylene (PP) fiber and an acid-modified polypropylene (MAPP) fiber which is obtained by modifying a PP fiber by maleic acid are used as the thermoplastic resin fibers. As described above, a PP fiber has good resin impregnation characteristics and slightly poor interfacial characteristics (e.g., interfacial shear strength). On the other hand, an MAPP fiber has slightly poor resin impregnation characteristics and good interfacial characteristics. Therefore, attempts have been made to braid a PP fiber and an MAPP fiber on the surface of a carbon fiber using the braiding technique to obtain a hybrid fiber composite, thereby simultaneously achieving good impregnation characteristics of the thermoplastic resin into the carbon fiber and good interfacial characteristics between the carbon fiber and the thermoplastic resin.

[Pattern of Braiding for Reinforced Fiber/Resin Fiber Composite]

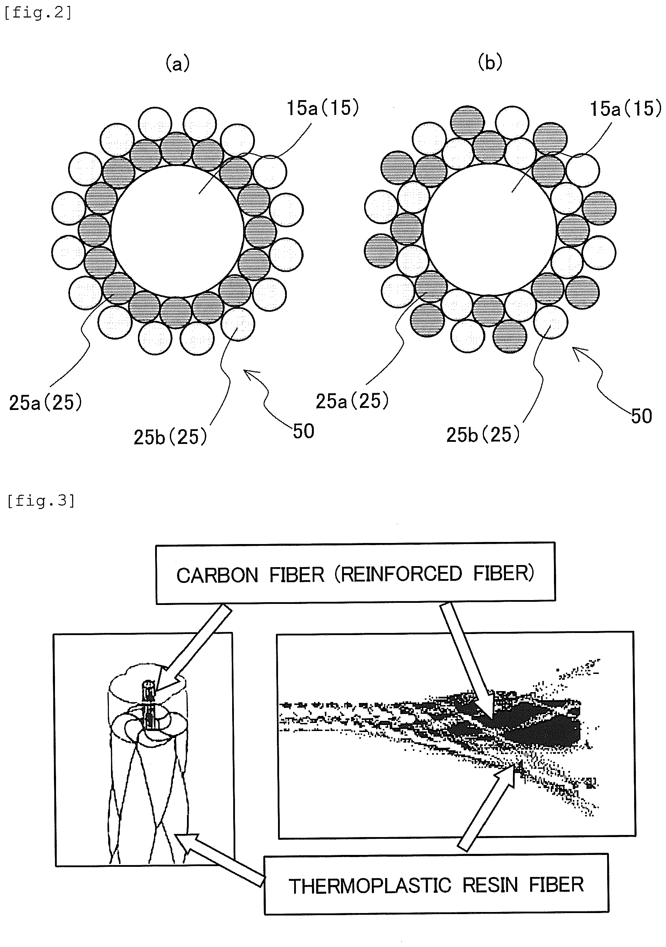

FIG. 2 is a schematic cross-sectional view of the reinforced fiber/resin fiber composite 50 for describing a pattern in which a PP fiber 25a and an MAPP fiber 25b (the braiding fiber strands 25) are braided with respect to a carbon fiber 15a (the axial fiber strand 15). In this example, 16 strands of the PP fiber 25a and 16 strands of the MAPP fiber 25b were braided with respect to one strand of the carbon fiber 15a to obtain a carbon fiber/PP fiber/MAPP fiber composite (hybrid fiber composite) which is an intermediate material for a long-fiber reinforced thermoplastic resin structure. The resin fibers were braided in two patterns shown in FIGS. 2 (a) and 2 (b) . In FIG. 2(a), only the PP fiber strands 25a are braided as a first layer to surround the surface of the carbon fiber 15a, and next, only the MAPP fiber strands 25b are braided as a second layer on the first layer. The braiding pattern of FIG. 2(a) is referred to as "double-layer arrangement." In FIG. 2(b), the PP fiber strands 25a and the MAPP fiber strands 25b are alternately braided as a first layer to surround the surface of the carbon fiber 15a, and next, the PP fiber strands 25a and the MAPP fiber strands 25b are alternately braided as a second layer in a manner similar to that of the first layer. The braiding pattern of FIG. 2(b) is referred to as "alternate arrangement." FIG. 3 shows a photograph of an external appearance of the carbon fiber/resin fiber composite of this example in which two thermoplastic resin fibers having different properties are braided with respect to a carbon fiber, and a diagram showing a structure thereof.

[Evaluation of Impregnation Characteristics]

The impregnation characteristics of a long-fiber reinforced thermoplastic resin structure (also referred to as a "hybrid structure") obtained by processing a carbon fiber/resin fiber composite (hybrid fiber composite) by thermoforming was evaluated by cross-sectional observation using a microscope.

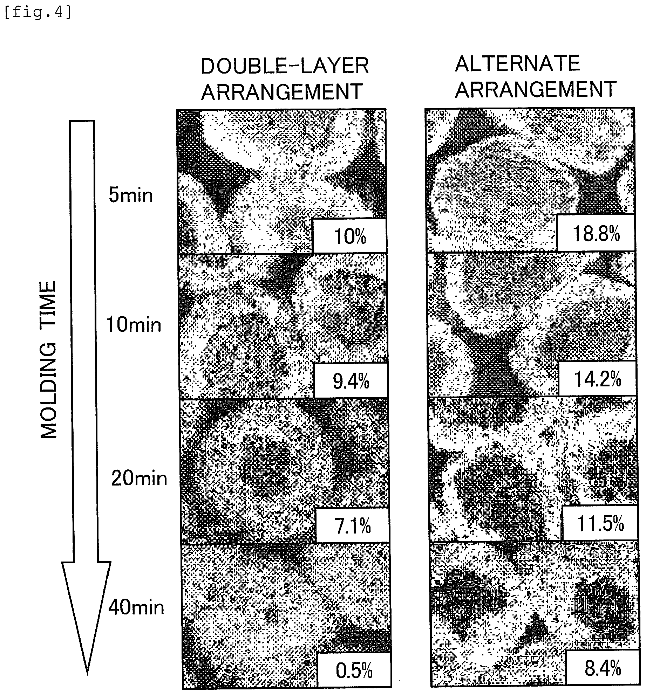

Initially, carbon fiber/resin fiber composites having the double-layer arrangement and the alternate arrangement were each processed by thermoforming to obtain test pieces of a long-fiber (carbon fiber) reinforced thermoplastic resin structure (hybrid structure). The thermoforming for each test piece was performed under conditions that the molding temperature was 200°C, the molding pressure was 10 MPa, and the molding time was 5 min, 10 min, 20 min, and 40 min. Next, a cross-section of each test piece was observed to evaluate how much (or how little) the carbon fiber was impregnated with the thermoplastic resin. FIG. 4 shows photographs of cross-sections of the test pieces having the double-layer and alternate arrangements, indicating changes in their impregnated states depending on the molding time. A numerical value described at the right corner of each photograph represents the unimpregnation ratio of the carbon fiber. The unimpregnation ratio is calculated by a procedure described below.

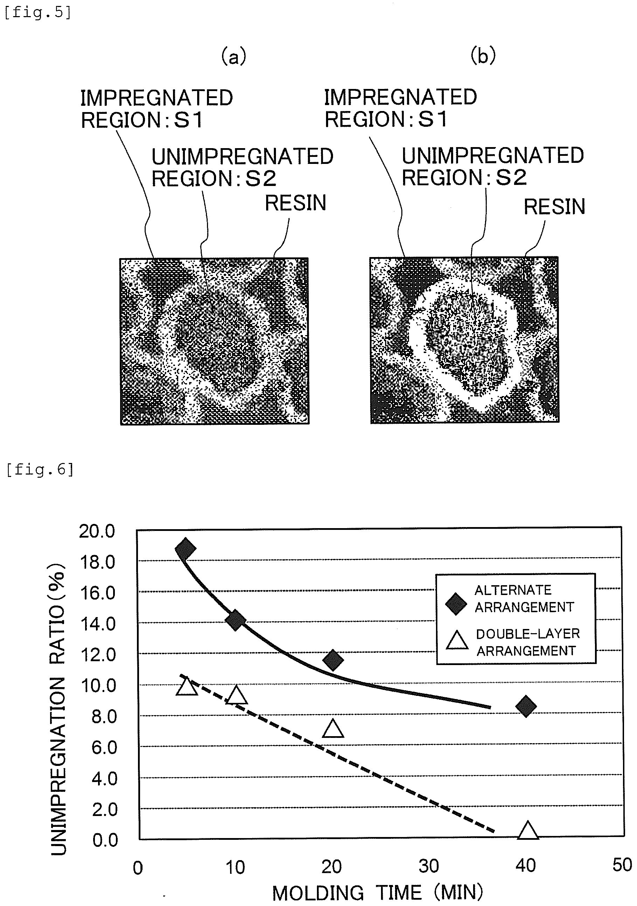

FIG. 5 shows example image data for calculating the unimpregnation ratio of the carbon fiber. FIGS. 5(a) and 5(b) show cross-sections of a test piece before and after image processing, respectively. The cross-sectional image of the carbon fiber (a bundle of fiber strands) of FIG. 5(a) is binarized by image processing using a predetermined threshold, to obtain the cross-sectional image of FIG. 5(b) having an impregnated region S1 indicated by a white region and an unimpregnated region S2 indicated by a black region. The unimpregnation ratio (%) is calculated using the values of S1 and S2 obtained from the cross-sectional image of FIG. 5(b) by:

$$\text{the unimpregnation ratio (\%)} = S2/(S1 + S2) \qquad (1)$$

FIG. 6 is a graph plotted to show a relationship between the unimpregnation ratio and molding time of each of the test pieces having the double-layer and alternate arrangements. As can be seen from FIG. 6, in both of the double-layer and alternate arrangements, the unimpregnation ratio of the thermoplastic resin with respect to the carbon fiber gradually decreases with molding time. In other words, it was observed that the carbon fiber is more sufficiently impregnated with the thermoplastic resin with an increase in the molding time. By comparison of the double-layer and alternate arrangements, it was found that the double-layer arrangement has impregnation characteristics better than those of the alternate arrangement. In particular, it was found that if the carbon fiber/resin fiber composite having the double-layer arrangement is subjected to thermoforming for 20 min or more, preferably 40 min or more, the carbon fiber can be impregnated to substantially the center thereof with the thermoplastic resin.

[Evaluation of Interfacial Characteristics]

A three point bending test was conducted using a flexure tester on a long-fiber reinforced thermoplastic resin structure (hybrid structure) which is obtained by processing a carbon fiber/resin fiber composite (hybrid fiber composite) by thermoforming, to evaluate the interfacial characteristics thereof. Mechanical characteristics in the longitudinal direction of the long-fiber reinforced thermoplastic resin structure were measured using the three point bending test. The interfacial characteristics can be indirectly estimated to be better with an increase in the values of the modulus of elasticity and strength.

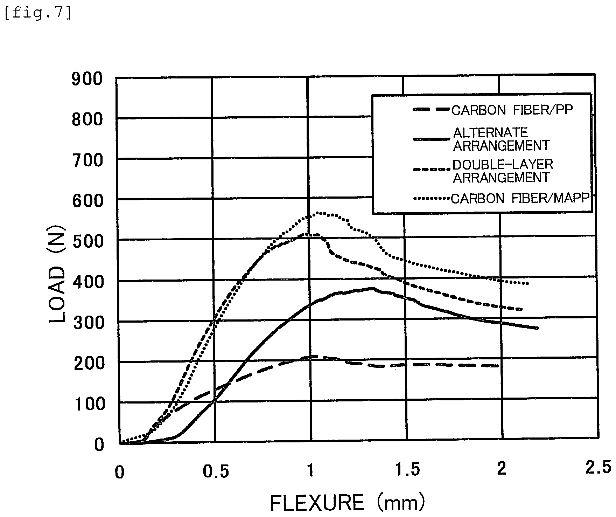

Long-fiber reinforced thermoplastic resin structures in the shape of a plate having a length of 50 mm, a width of 20 mm, and a thickness of 2 mm were produced as test pieces by thermoforming. As the test pieces, molded products of carbon fiber/resin fiber composites having the double-layer and alternate arrangements of FIG. 2 were prepared. As control test pieces, molded products of a carbon fiber/PP fiber composite and a carbon fiber/MAPP fiber composite were prepared. The test pieces were produced by thermoforming under conditions that the molding temperature was 200°C, the molding pressure was 10 MPa, and the molding time was 5 min, 10 min, 20 min, and 40 min. Next, a load was applied to each test piece at the center of the span distance of 32 mm at a crosshead speed of 1 mm/min. The three point bending test was continued until the test piece was broken. FIG. 7 is a graph of measurement data (load-flexure curve) of each test piece which was obtained by the three point bending test. The modulus of elasticity in bending E (MPa) and flexural stress σ (MPa) of each test piece were estimated using the following expressions (2) and (3) based on the measurement data. The maximum value of the flexural stress σ is defined as a flexural strength. Note that these calculations were performed using a technique complying with JIS K7017.

$$E = L^3/(4bh^3) \cdot (\Delta F/\Delta S) \qquad (2)$$

$$\sigma = 3FL/(2bh^2) \qquad (3)$$

L: the distance between supporting points (mm)
b: the width of the test piece (mm)
h: the thickness of the test piece (mm)
F: load (N)
$\Delta$s: the difference (mm) between flexures S' and S" corresponding to flexural strains $\varepsilon'$ = 0.0005 and $\varepsilon''$ = 0.0025
$\Delta$F: the difference (N) between loads F' and F" in S' and S", respectively

The test result is shown in Table 1 below.

Table 1

| Test No. | Test piece | Elastic modulus (GPa) | Strength (MPa) |
|---|---|---|---|
| 1 | carbon fiber/resin fiber (double layer) | 50.2 | 314 |
| 2 | carbon fiber/resin fiber (alternate) | 32.3 | 232 |
| 3 | carbon fiber/PP fiber | 18.2 | 110 |
| 4 | carbon fiber/MAPP fiber | 48.6 | 352 |

As can be seen from the above result, the long-fiber reinforced thermoplastic resin structures (hybrid structures) formed of the carbon fiber/resin fiber composite having the double-layer arrangement (Test No. 1) and the carbon fiber/resin fiber composite having the alternate arrangement (Test No. 2) have a modulus of elasticity and strength much greater than those of the long-fiber reinforced thermoplastic resin structure (non-hybrid structure) formed of the carbon fiber/PP fiber composite (Test No. 3). In particular, the carbon fiber/resin fiber composite of the double-layer arrangement (Test No. 1) has a modulus of elasticity and strength similar to those of the carbon fiber/MAPP fiber composite (Test No. 4). Therefore, if a carbon fiber/resin fiber composite which includes a hybrid of a PP fiber and an MAPP fiber as the resin fiber is processed by thermoforming, a high-performance long-fiber reinforced thermoplastic resin structure having a sufficient strength in the long fiber direction (longitudinal direction) can be obtained with as high interfacial characteristics as those of a carbon fiber/MAPP fiber composite while reducing a decrease in the impregnation characteristics due to the MAPP fiber.

[Other Embodiments]

(2) A hybrid fiber composite produced by the braiding technique may have a variety of structures depending on the intended long-fiber reinforced thermoplastic resin structure. There are traditional braids, such as a square braid, flat braid, circular braid, etc. A hybrid fiber composite may be constructed on the basis of these braids. For example, when a pillar which is a part of the body of an automobile is manufactured, a reinforced fiber/resin fiber composite which is an intermediate material is produced in the form of a ribbon-like flat braid, and is wound into an annular shape. As a result, a hollow pillar having a light weight and a high strength can be manufactured.
(3) In the above embodiment, a braided fabric (reinforced fiber/resin fiber composite) is produced using the core fiber 40 and the axial fiber strand 15 which are a reinforced fiber and the braiding fiber strand 25 which is a resin fiber. The fiber types of the core fiber 40, the axial fiber strand 15, and the braiding fiber strand 25 are not particularly limited, and may be suitably determined, depending on the reinforced fiber/resin fiber composite to be produced. For example, the axial fiber strand 15 may be a reinforced fiber while the core fiber 40 and the braiding fiber strand 25 may be a resin fiber.

INDUSTRIAL APPLICABILITY

The reinforced fiber/resin fiber composite of the present invention serves as an intermediate material for a long-fiber reinforced thermoplastic resin structure, and is preferably applicable to the fields of automobiles, ships, aircrafts, etc.

REFERENCE SIGNS LIST

10    AXIAL FIBER SUPPLY UNIT

11      TIP PORTION
15      AXIAL FIBER STRAND (REINFORCED FIBER)
15a     CARBON FIBER
20      BRAIDING FIBER SUPPLY UNIT
21      SPINDLE
22      UNWINDING BAR
25      BRAIDING FIBER STRAND (RESIN FIBER)
25a     PP FIBER
25b     MAPP FIBER
40      CORE FIBER (REINFORCED FIBER)
50      REINFORCED FIBER/RESIN FIBER COMPOSITE
100     BRAIDING MACHINE

**Claims**

1.  A reinforced fiber/resin fiber composite (50) which is an intermediate material for a long-fiber reinforced thermoplastic resin structure, **characterized in that**
    the reinforced fiber (15) is a long fiber extending in a longitudinal direction,
    the resin fiber (25) includes at least two thermoplastic resin fibers,
    the at least two thermoplastic resin fibers are braided at a predetermined angle with respect to the longitudinal direction of the long fiber to form a braid around the reinforced fiber (15); and
    the at least two thermoplastic resin fibers are a polypropylene (PP) fiber and an acid-modified polypropylene (MAPP) fiber.

2.  The reinforced fiber/resin fiber composite (50) of claim 1, **characterized in that**
    the reinforced fiber (15) is selected from a carbon fiber, glass fiber, and aramid fiber.

3.  The reinforced fiber/resin fiber composite (50) of claim 1 or 2, **characterized in that**
    the at least two thermoplastic resin fibers are selected to have complementary physical properties after thermoforming.

4.  A long-fiber reinforced thermoplastic resin structure obtainable from the reinforced fiber/resin fiber composite (50) of any one of claims 1 to 3 as intermediate product.

**Patentansprüche**

1.  Verbundstoff (50) aus einer verstärkten Faser und einer Harzfaser, der ein Zwischenmaterial für eine langfaserverstärkte thermoplastische Harzstruktur ist, **dadurch gekennzeichnet, dass**
    die verstärkte Faser (15) eine sich in einer Längsrichtung erstreckende Langfaser ist,
    die Harzfaser (25) wenigstens zwei thermoplastische Harzfasern umfasst,
    die wenigstens zwei thermoplastischen Harzfasern in einem vorbestimmten Winkel in Bezug auf die Längsrichtung der Langfaser verflochten sind, um ein Geflecht um die verstärkte Faser (15) herum zu bilden, und
    die wenigstens zwei thermoplastischen Harzfasern eine Polypropylen-(PP)-Faser und eine säuremodifizierte Polypropylen-(MAPP)-Faser sind.

2.  Verbundstoff (50) aus einer verstärkten Faser und einer Harzfaser nach Anspruch 1, **dadurch gekennzeichnet, dass**
    die verstärkte Faser (15) aus einer Carbonfaser, Glasfaser und Aramidfaser ausgewählt ist.

3.  Verbundstoff (50) aus einer verstärkten Faser und einer Harzfaser nach Anspruch 1 oder 2, **dadurch gekennzeichnet, dass**
    die wenigstens zwei thermoplastischen Harzfasern ausgewählt sind, um nach einem Thermoformen komplementäre physikalische Eigenschaften aufzuweisen.

4.  Langfaserverstärkte thermoplastische Harzstruktur, die aus dem Verbundstoff (50) aus einer verstärkten Faser und einer Harzfaser nach einem der Ansprüche 1 bis 3 erhältlich ist, als Zwischenprodukt.

**Revendications**

1. Composite de fibre renforcée/fibre de résine (50) qui est un matériau intermédiaire pour une structure de résine thermoplastique renforcée par une fibre longue, **caractérisé en ce que**
la fibre renforcée (15) est une fibre longue s'étendant dans une direction longitudinale,
la fibre de résine (25) comprend au moins deux fibres de résine thermoplastique,
les au moins deux fibres de résine thermoplastique sont tressées à un angle prédéterminé par rapport à la direction longitudinale de la fibre longue pour former une tresse autour de la fibre renforcée (15) ; et
les au moins deux fibres de résine thermoplastique sont une fibre de polypropylène (PP) et une fibre de polypropylène modifié par un acide (MAPP).

2. Composite de fibre renforcée/fibre de résine (50) selon la revendication 1, **caractérisé en ce que**
la fibre renforcée (15) est choisie parmi une fibre de carbone, une fibre de verre, et une fibre d'aramide.

3. Composite de fibre renforcée/fibre de résine (50) selon la revendication 1 ou 2, **caractérisée en ce que**
les au moins deux fibres de résine thermoplastique sont choisies pour présenter des propriétés physiques complémentaires après thermo-façonnage.

4. Structure de résine thermoplastique renforcée par une fibre longue pouvant être obtenue à partir du composite de fibre renforcée/ fibre de résine (50) selon l'une quelconque des revendications 1 à 3 comme produit intermédiaire.

[fig.1]

(a)

(b)

[fig.2]

(a)

(b)

15a(15)

15a(15)

25a(25)

25a(25)

25b(25)

25b(25)

50

50

[fig.3]

CARBON FIBER (REINFORCED FIBER)

THERMOPLASTIC RESIN FIBER

[fig.4]

[fig.5]

(a)

IMPREGNATED
REGION : S1

UNIMPREGNATED
REGION : S2

RESIN

(b)

IMPREGNATED
REGION : S1

UNIMPREGNATED
REGION : S2

RESIN

[fig.6]

[fig.7]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007118216 A
- JP H09324331 A